Europäisches Patentamt

European Patent Office

Office européen des brevets

(11) Numéro de publication: **0 265 855**
**A1**

(12) # DEMANDE DE BREVET EUROPEEN

(21) Numéro de dépôt: **87115538.8**

(22) Date de dépôt: **23.10.87**

(51) Int. Cl.4: **B25J 9/02**

(30) Priorité: **24.10.86 FR 8614948**

(43) Date de publication de la demande:
**04.05.88 Bulletin 88/18**

(84) Etats contractants désignés:
**CH DE FR GB IT LI SE**

(71) Demandeur: **Microbo S.A.**
**Rue de la Gare 8**
**CH-2024 St-Aubin(CH)**

(72) Inventeur: **Belot, Michel**
**Rue du Sentier 13**
**CH-2013 Colombier(CH)**
Inventeur: **Delacrétaz, Blaise**
**Rue Perrière 5**
**CH-2003 Neuchâtel(CH)**

(74) Mandataire: **Caron, Gérard et al**
**ICB Ingénieurs Conseils en Brevets SA**
**Passage Max. Meuron 6**
**CH-2001 Neuchâtel(CH)**

(54) **Robot industriel.**

(57) Ce robot comporte un châssis (A) dont les côtés forment des rails de guidage (A3, A4) pour deux ponts (B, C) comportant chacun deux chariots (B2, B3, C2, C3) réunis respectivement par des traverses (B3, C3). Les traverses constituent elles-mêmes des guides croisés pour un porte-outil (D). Les mouvements des ponts (B, C) selon les directions x et y sont ainsi indépendants l'un de l'autre.

Fig.1

## ROBOT INDUSTRIEL

La présente invention concerne les robots industriels.

Plus précisément, l'invention a trait à un appareil permettant de positionner un outil à un endroit quelconque d'une table de travail avec une haute précision de fonctionnement et en un temps aussi court que possible.

Des appareils de ce genre sont déjà connus.

Par exemple, le brevet US-A-4.005.782 décrit un appareil de positionnement d'une pince de manipulation d'objets qui est dotée de trois degrés de liberté, s'étendant respectivement dans trois directions X, Y et Z, mutuellement perpendiculaires.

La pince est montée sur un porte-outil qui peut se déplacer verticalement sur un chariot. Ce dernier est monté mobile en translation horizontale (direction X) sur un second chariot, à son tour monté mobile en translation horizontale (direction Y) sur un bâti fixe.

L'inconvénient majeur de cette disposition est que le second chariot supporte l'ensemble du mécanisme qui assure le déplacement de l'outil selon les autres directions. Ceci signifie que les mouvements de ce second chariot sont influencés par l'inertie de cet ensemble. Il en résulte un effet défavorable sur la précision de positionnement dans la direction Y et sur le temps de cycle du robot.

En outre, les tolérances d'ajustement et de montage des éléments se trouvent cumulées à partir du bâti jusqu'à l'outil, augmentant encore l'effet défavorable précité.

On peut enfin signaler que le premier chariot de cet appareil connu est monté en porte-à-faux sur le second chariot, ce qui lui impose des sollicitations défavorables.

Ce dernier inconvénient est atténué dans une autre construction décrite dans le brevet US-A-3.241.243. Dans ce cas, il s'agit d'un appareil permettant de contrôler l'emplacement de trous percés dans des pièces en forme de plaque. Ce contrôle est effectué à l'aide d'un palpeur qui peut être déplacé dans trois directions X, Y et Z mutuellement perpendiculaires. Le palpeur est monté mobile en hauteur sur un portique déplaçable horizontalement dans la direction Y sur un châssis. Ce dernier, à son tour, est monté en translation horizontale selon la direction X, sur des rails parallèles faisant partie d'un bâti fixe. Par conséquent, le porte-à-faux est ici éliminé, mais en revanche, il subsiste l'inconvénient précédemment mentionné à propos du brevet US-A-4005.782, à savoir que le premier chariot (le portique) est supporté par le second chariot (le châssis).

L'invention a pour but de fournir un robot industriel de haute précision de positionnement, dans lequel les inconvénients de la technique antérieure sont très fortement réduits.

L'invention a donc pour objet un robot industriel dont le porte-outil est doté d'au moins deux degrés de liberté pour pouvoir être placé à un endroit quelconque d'un champ d'action cartésien à desservir, ce robot comprenant un châssis sur lequel sont montés deux ponts mobiles supportant le porte-outil et pourvus de moyens moteurs assurant leur déplacement respectivement selon les deux degrés de liberté. Ce robot est caractérisé:

-en ce que le châssis revêt la forme d'un cadre fixe dont les paires de côtés opposés forment des rails de guidage fixes pour lesdits ponts,

-en ce que chacun desdits ponts comporte deux chariots montés mobiles respectivement sur deux rails opposés correspondants et reliés ensemble par une traverse s'étendant d'un rail à l'autre dans une direction qui est perpendiculaire à la direction de mouvement de ce pont,

-et en ce que lesdites traverses s'entrecroisent à une certaine distance l'une de l'autre dans le porte-outil et constituent des éléments de guidage sur lesquels le porte-outil est monté à coulissement libre.

Il résulte de ces caractéristiques que les mouvements effectués par les deux ponts sont indépendants l'un de l'autre, de sorte que l'inertie de chaque pont ne peut influencer le mouvement de l'autre. En d'autres termes, lorsque le pont affecté à la direction x par exemple, se déplace, il entraîne le porte-outil dans cette direction, ce dernier coulissant librement sur la traverse de l'autre pont. Ainsi, il n'y a aucune interaction d'un pont sur l'autre. Cependant, ceci n'empêche nullement que les mouvements en x et y soient effectués simultanément.

Il est également à remarquer que, du fait de cette indépendance de mouvement, l'inertie des masses en mouvement n'est pas cumulative, ce qui contribue à alléger les moyens moteurs et à réduire leur puissance absorbée.

Enfin, le porte-outil étant guidé sur une longueur appréciable des traverses, on obtient une grande stabilité du porte-outil, ce qui augmente encore la précision de positionnement.

L'invention sera mieux comprise à l'aide de la description qui va suivre d'un mode de réalisation préféré du robot industriel suivant l'invention, cette description étant faite en faisant référence aux dessins annexés, donnés uniquement à titre d'exemple et dans lesquels:

-la figure 1 est une vue d'ensemble en perspective du robot industriel;

-la figure 2 est une vue en plan du robot;

-la figure 3 est une vue partielle en coupe et en élévation du porte-outil du robot;

-la figure 4 est une·vue en plan, et à plus grande échelle, d'un chariot de l'un des ponts du robot;

-les figures 5, 6 et 7 sont des vues en coupe et en élévation, respectivement suivant les lignes V-V, VI-VI et VII-VII des figures 2 et 5;

-la figure 8 est une vue en plan de l'autre chariot du pont auquel appartient le chariot des figures 4 à 7;

-les figures 9, 10 et 11 sont des vues en coupe et en élévation, respectivement suivant les lignes IX-IX, X-X et XI-XI apparaissant sur les figures 2 et 9;

-la figure 12 est une vue en plan de l'un des chariots de l'autre pont du robot;

-les figures 13, 14 et 15 sont des vues en élévation et en coupe, respectivement suivant les lignes XIII-XIII, XIV-XIV et XV-XV apparaissant sur les figures 2 et 13;

-la figure 16 est une vue en plan de l'autre chariot du pont auquel appartient le chariot représenté sur les figures 12 à 15;

-les figures 17, 18 et 19 sont des vues en élévation et en coupe, respectivement suivant les lignes XVII-XVII, XVIII-XVIII et IXX-IXX apparaissant respectivement sur les figures 2 et 16;

-la figure 20 est une vue en coupe horizontale de l'une des pièces d'angle du robot; et

-la figure 21 est une vue en élévation de cette pièce.

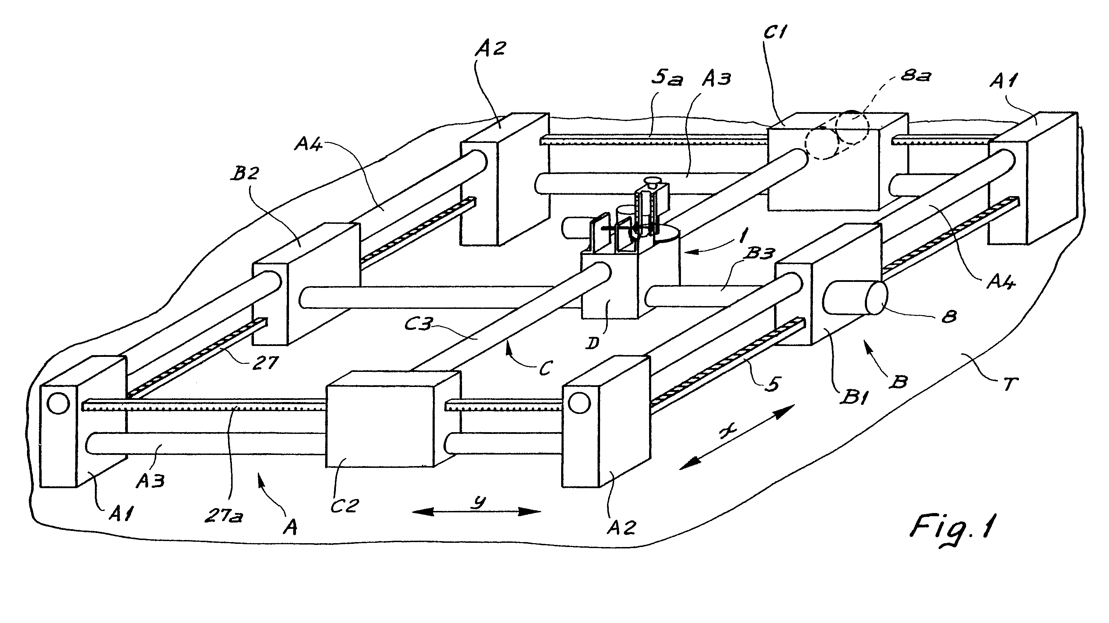

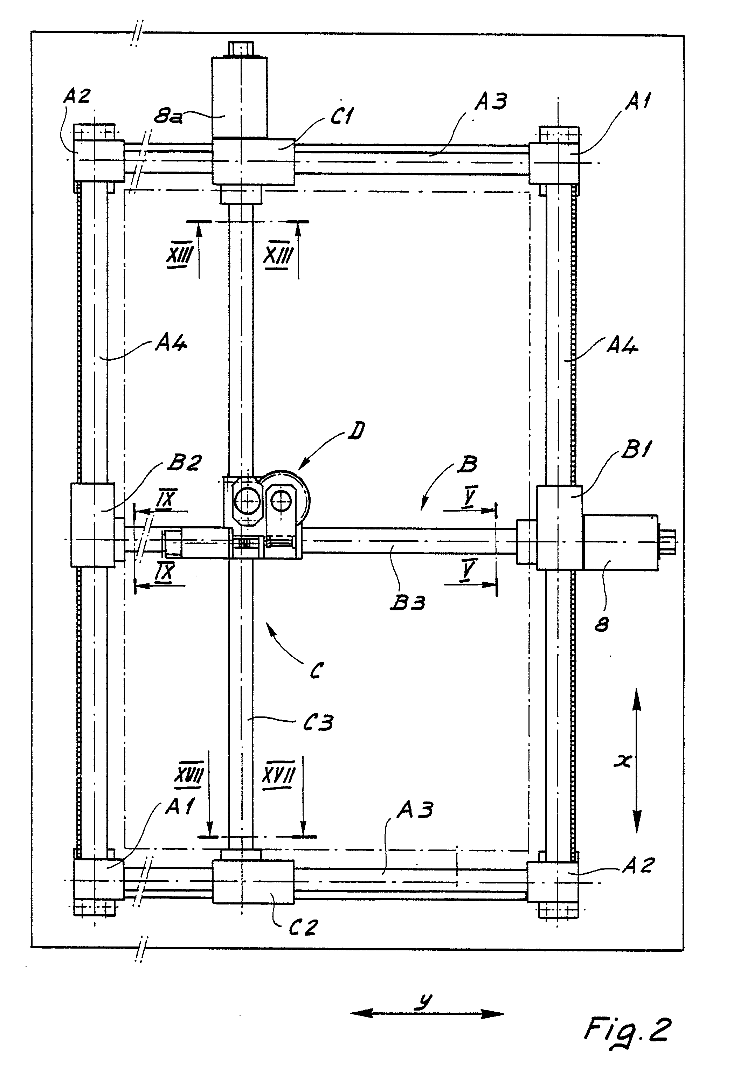

On va tout d'abord se référer aux figures 1 et 2 qui montrent, respectivement en perspective et en plan, des vues d'ensemble du robot industriel suivant l'invention.

Celui-ci est essentiellement composé des sous-ensembles suivants:

-Un châssis A de forme rectangulaire ou carrée, comprenant quatre pièces d'angle A1 et A2 et deux paires de poutrelles A3 et A4, formant respectivement les côtés opposés du châssis A. Ce châssis définit ainsi en champ d'action cartésien, par exemple sur une table de travail T sur laquelle le robot est installé. Les côtés opposés définissent respectivement les axes x et y du champ d'action (voir les flèches sur les figures 1 et 2).

-Un premier pont B orienté perpendiculairement à l'axe x et composé de deux chariots extérieurs B1 et B2 et d'une traverse B3;

-Un second pont C composé de deux chariots C1 et C2 et d'une traverse C3, orienté perpendiculairement à l'axe y;

-Un porte-outil D monté coulissant sur les traverses B3 et C3.

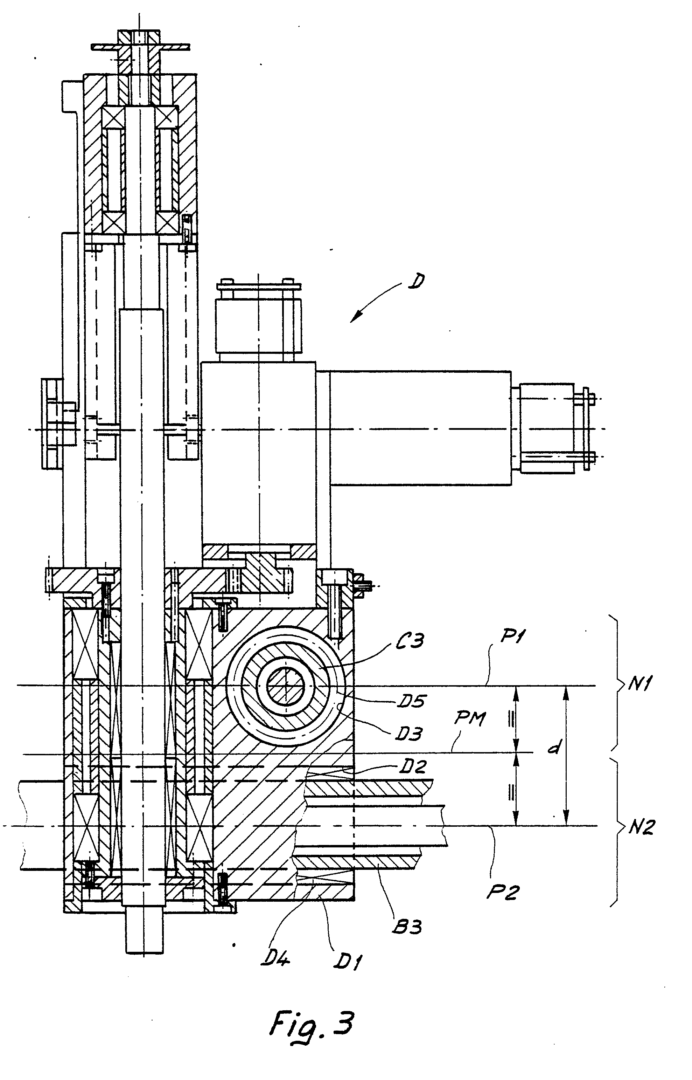

Le porte-outil qui est représenté sur les figures peut être d'une conception quelconque, pourvu qu'il soit aménagé pour coulisser sur les traverses B3 et C3. Cependant, une forme préférée de ce porte-outil D apparaît sur la figure 3. Pour plus de détails, on peut se référer à la demande de brevet FR 86 14 947.

Pour comprendre la présente invention, il suffit de noter, à propos de ce porte-outil, qu'il comporte un corps D1 percé de deux passages D2 et D3 dans lesquels passent respectivement les traverses B3 et C3 qui y sont guidées d'un bout à l'autre des passages grâce à des roulements à circulation de billes D4 et D5, respectivement. Les axes de ces passages D2 et D3 sont situés dans des plans parallèles P1 et P2 écartés l'un de l'autre d'une distance d, ces plans étant horizontaux dans le mode de réalisation décrit de l'invention.

Pour les besoins de la description, on appellera "plan de référence médian PM" le plan qui est parallèle aux plans P1 et P2 et qui est écarté de ceux-ci de la distance d/2.

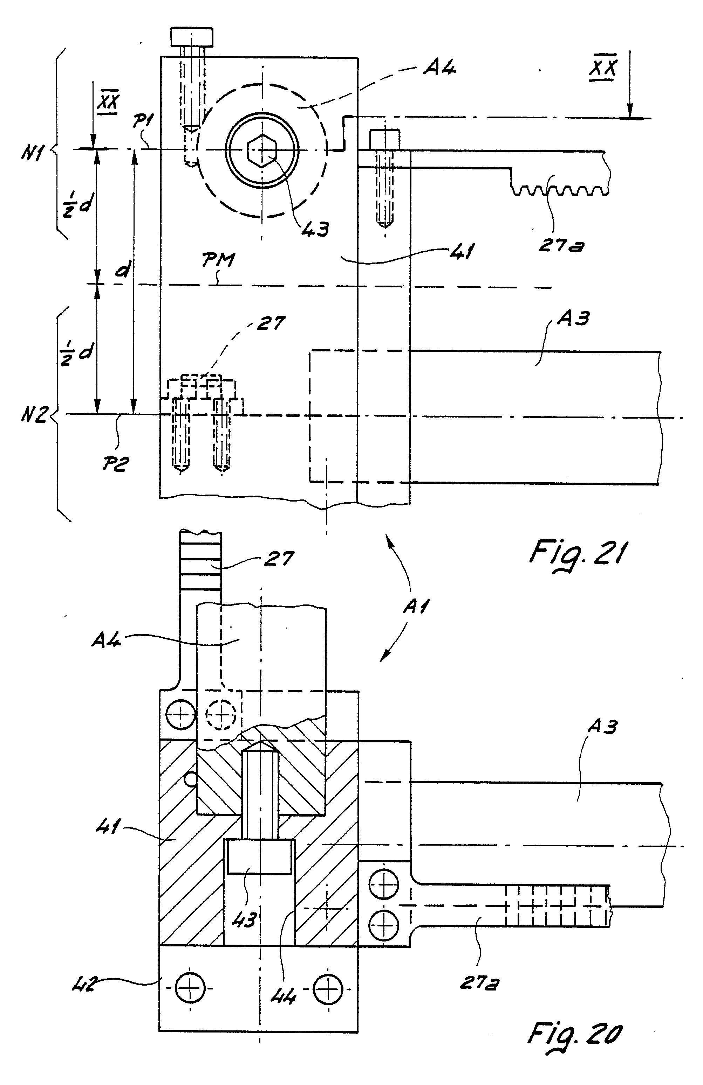

De façon plus générale, on constate ainsi que les traverses B3 et C3 sont situées à deux niveaux différents que l'on appellera N2 et N1 dans la description qui va suivre (voir aussi la figure 21), ces niveaux étant situés de part et d'autre du plan de référence PM.

Par ailleurs, les passages D2 et D3 ainsi que les traverses B3 et C3 ont des sections circulaires dans l'exemple décrit, bien que l'invention ne soit pas limitée à cette forme particulière.

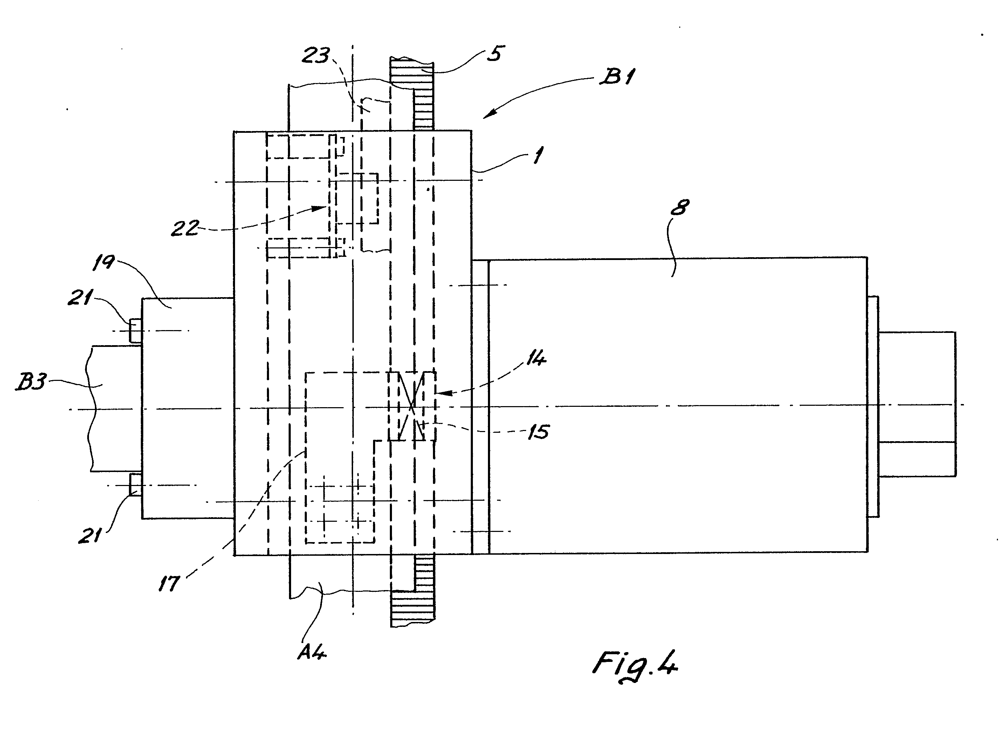

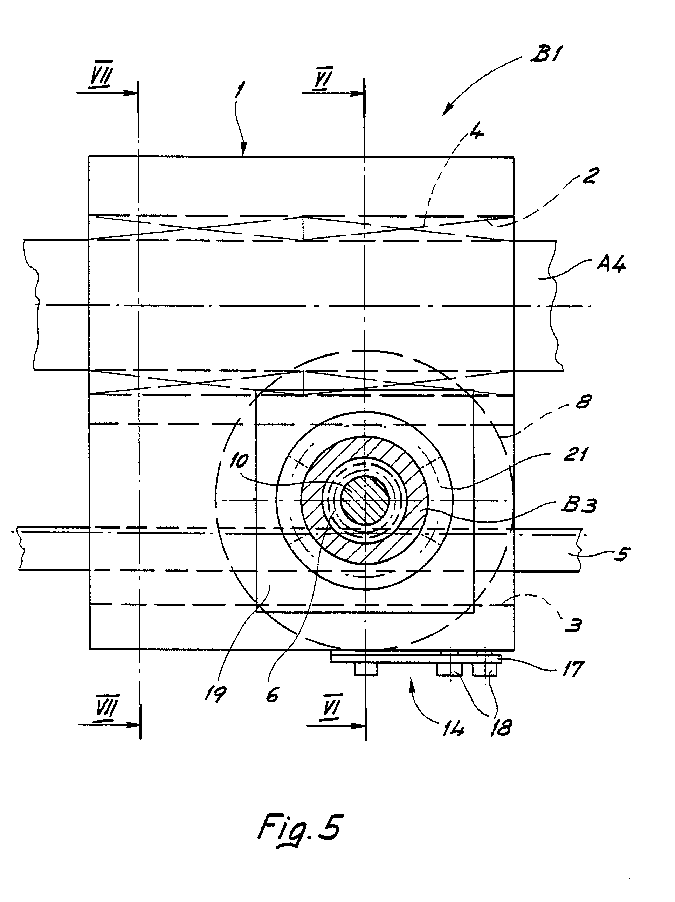

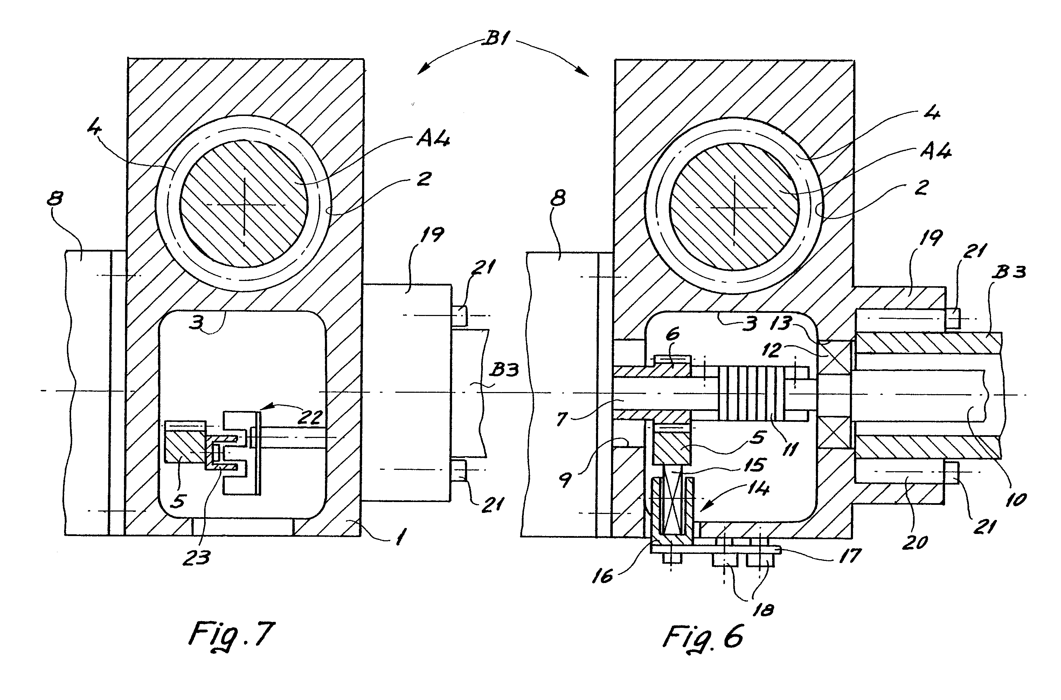

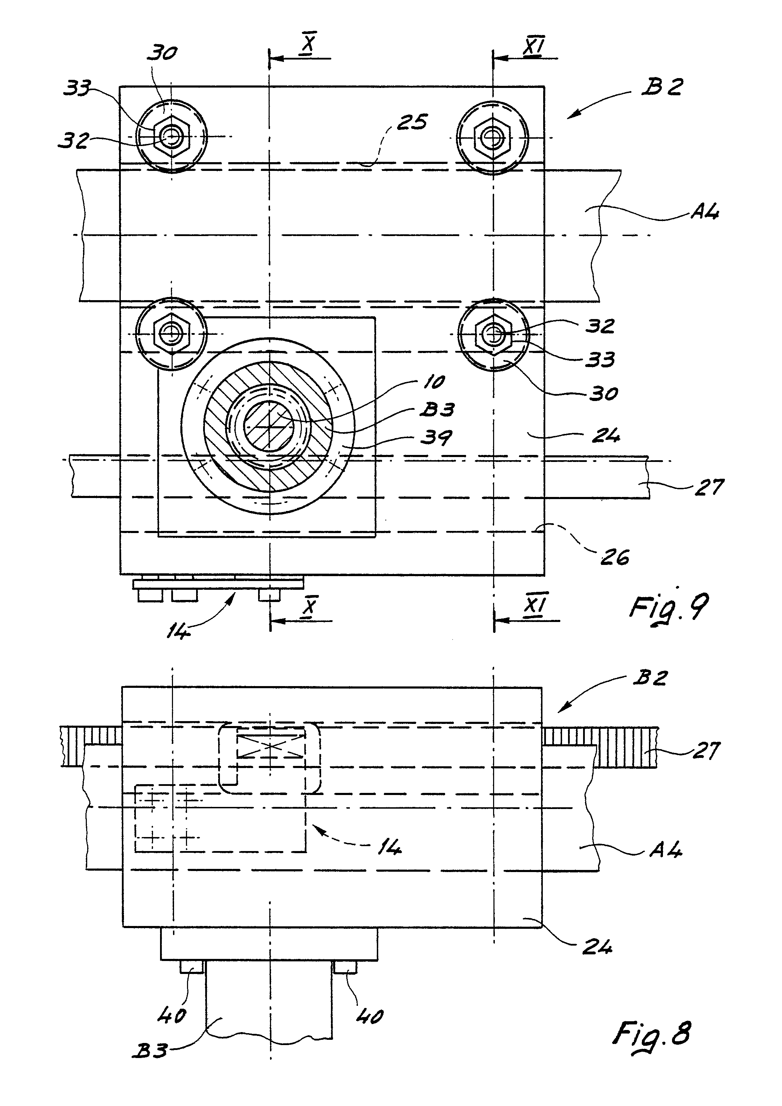

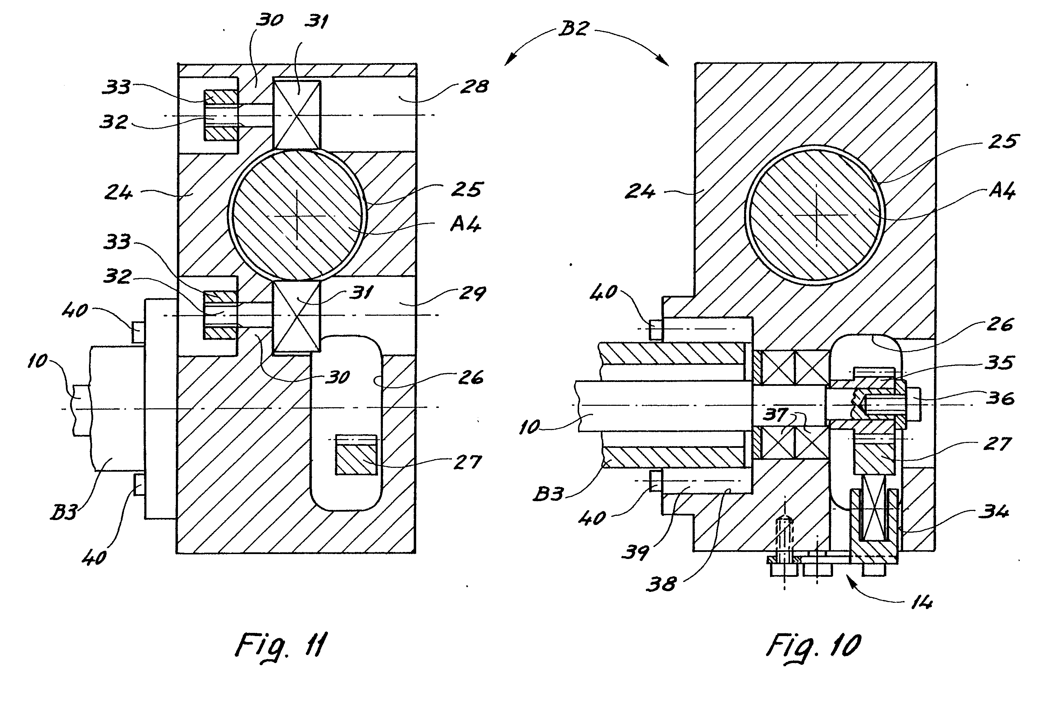

On va maintenant se référer aux figures 4 à 11 qui montrent la construction du pont B, le chariot B1 étant représenté sur les figures 4 à 7, tandis que le chariot B2 apparaît plus particulièrement sur les figures 8 à 11.

Le chariot B1 comporte un corps monobloc 1 usiné de manière à présenter essentiellement deux passages superposés, à savoir un passage cylindrique 2 et un passage 3 de section rectangulaire. Le passage 2 est situé au niveau N1 et traversé par la poutrelle latérale A4 correspondante sur laquelle le chariot B1 est guidé par l'intermédiaire d'un roulement longitudinal à circulation de billes 4 monté dans le passage 2.

L'autre passage 3 situé au niveau N2 est traversé par une crémaillère 5 s'étendant parallèlement la poutrelle latérale correspondante A4 et destinée à contribuer à l'entraînement du pont B le long de la poutrelle A4 correspondante.

La crémaillère 5 coopère à cet effet avec un premier pignon 6 calé sur l'arbre de sortie 7 d'un moteur électrique 8 fixé latéralement et à l'extérieur sur le corps 1.

L'arbre de sortie 7 traverse un trou 9 pratiqué dans la paroi latérale du passage 3 et est prolongé par une broche de transmission 10 raccordée à l'arbre de sortie 7 par l'intermédiaire d'un accouplement élastique 11. La broche de transmission 10 est montée à rotation dans un roulement 12 disposé dans un trou 13 de la paroi latérale opposée du passage 3 en alignement avec le trou 9.

La crémaillère 5 est associée à un dispositif de sustentation élastique 14 comprenant un galet rotatif 15 monté dans une chape 16 fixée à son tour sur une plaquette élastique 17 rapportée sur le bloc 1 au moyen de vis 18. Cette construction permet d'éviter une flexion de la crémaillère 5 lorsque le chariot B1 se déplace le long de la poutrelle A4, moyennant quoi un bon engrènement du pignon 6 avec la crémaillère 5 peut toujours être garanti.

Un raccord 19 prévu au niveau N2 est usiné sur le bloc 1 en alignement avec les trous 9 et 13. Il sert au montage de la traverse B3 qui y est coincée par un anneau de compression 20 mis sous contrainte par des vis 21 et au moyen duquel la traverse B3 dispose d'une certaine liberté d'adaptation autour de son axe pour compenser les contraintes pouvant être imposées à l'ensemble du pont B au cours du fonctionnement.

On peut également signaler que le chariot B1 est équipé d'un capteur de position 22, de type opto-électronique par exemple, coopérant avec une règle de positionnement 23 s'étendant le long de la crémaillère 5.

Le chariot B2 qui est prévu à l'autre extrémité du pont B est représenté sur les figures 8 à 11. Il comporte un corps monobloc 24 percé d'un passage cylindrique 25 au niveau N1 et d'un passage 26 de section rectangulaire au niveau N2, ces passages s'étendent parallèlement d'un bout à l'autre du corps 24. Le passage 25 est prévu pour la traversée de la poutrelle A4 correspondante et l'autre passage 26 pour une crémaillère 27 qui se trouve disposée dans le châssis en-dessous de cette poutrelle A4, la construction étant à cet égard identique à celle du côté opposé du châssis.

Le passage 25 est cylindrique et communique avec deux paires d'alésages transversaux 28 et 29 pourvus chacun d'un épaulement annulaire 30. Des galets de guidage 31 montés sur des fusées 32, rendues solidaires des épaulement 30 respectifs grâce à des écrous 33, dépassent radialement des parois des alésages 28 et 29 pour assurer le guidage du chariot B2 sur la poutrelle A4.

Le passage 26 communique avec un trou 34 débouchant à la surface inférieure du corps 24 pour permettre le montage d'un dispositif de sustentation élastique 14 identique à celui que porte le chariot B1 et servant à éviter la flexion de la crémaillère 27.

Celle-ci engrène avec un second pignon moteur 35 fixé sur l'extrémité de la broche de transmission 10 grâce à une vis 36. La broche est montée à rotation dans le chariot B2 à l'aide de deux roulements 37 placés dans la partie étroite d'une chambre cylindrique 38 ménagée dans le corps 24 du chariot B2. La traverse B3 est fixée dans la partie large de cette chambre à l'aide d'un anneau de compression 39 analogue à celui prévu dans le chariot B1. Cet anneau est mis sous contrainte par des vis 40.

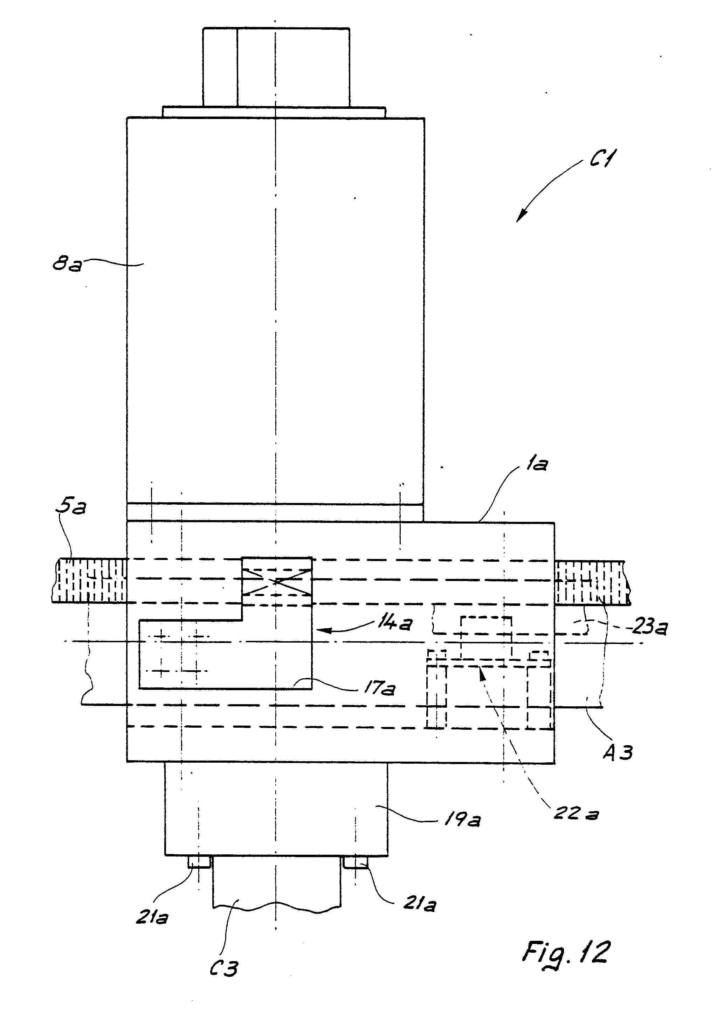

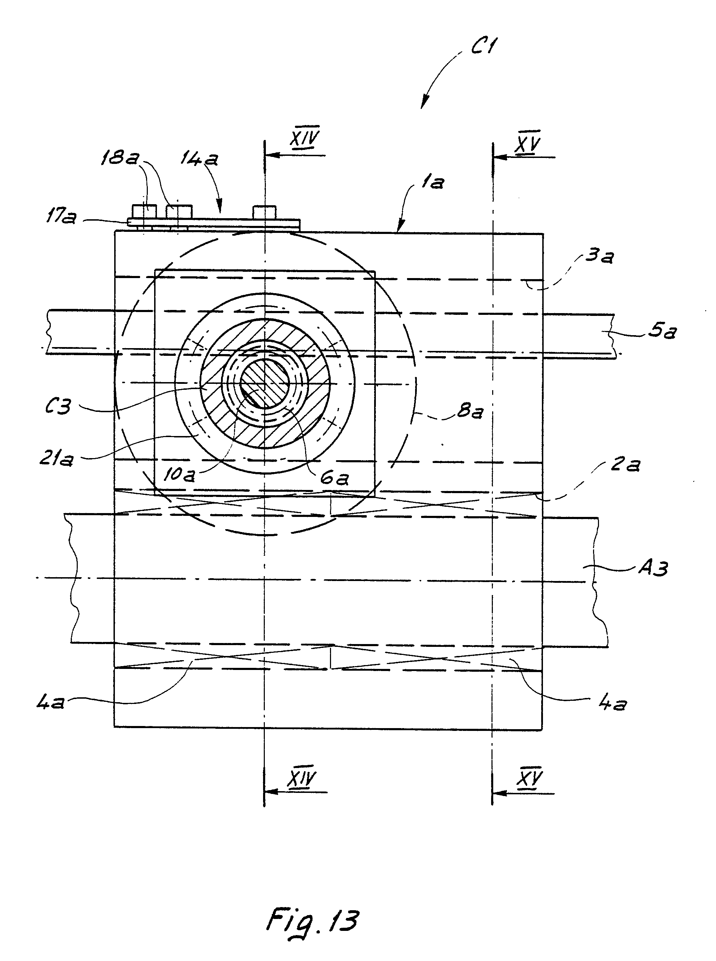

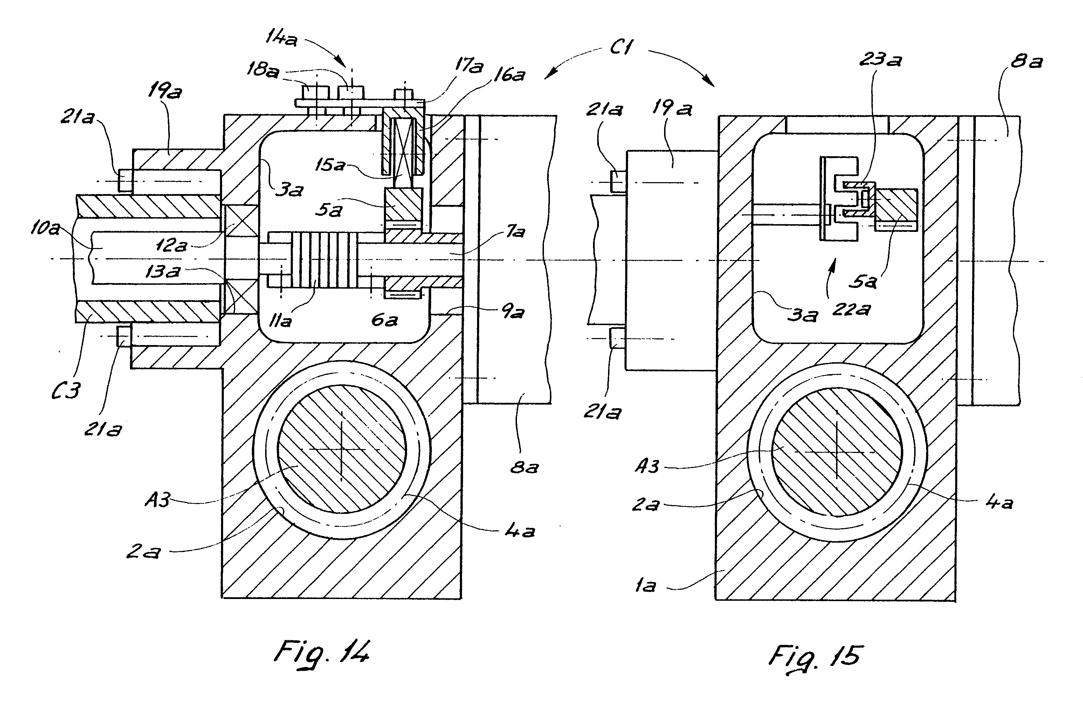

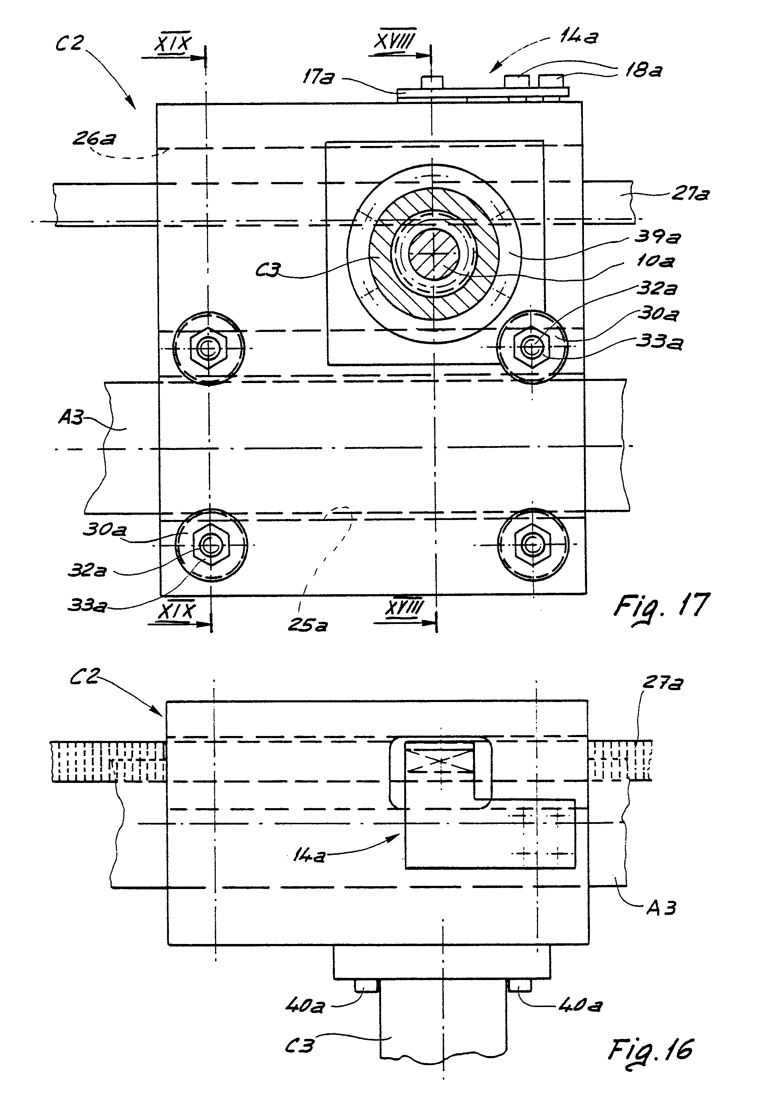

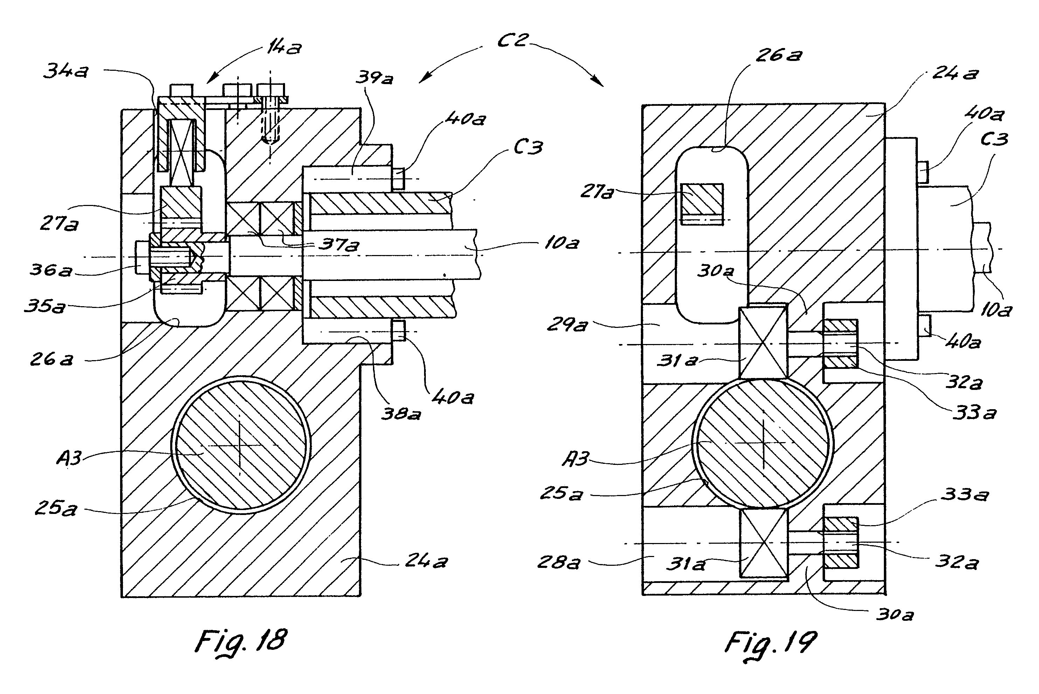

Les figures 12 à 19 représentent la construction du pont C du robot industriel. En examinant attentivement ces figures, on s'aperçoit que les chariots C1 et C2 ont en réalité une construction rigoureusement identique à celle des chariots B1 et B2. Seul leur position dans le robot est inversée par rapport à la position de ces derniers.

Pour faciliter la lecture des figures 12 à 19, on y a reporté les mêmes références que sur les figures 3 à 11 pour désigner des pièces identiques, ces références étant toutefois affectées de l'indice a.

Ainsi, par exemple, si pour les chariots B1 et B2 les passages 2 et 25 se trouvent situés au niveau N1, les passages équivalents 2a et 25a des chariots C1 et C2 se trouvent au niveau N2.

Ceci nécessite, par rapport aux poutrelles A4 et aux crémaillères 5 et 27, une inversion des positions des poutrelles latérales opposées A3 du châssis A par rapport aux crémaillères 5a et 27a qui leur sont associées, ce qui peut facilement être observé sur la figure 1.

Les figures 20 et 21 représentent l'une des pièces d'angle A1. Les pièces d'angle A2 ont une construction spéculaire par rapport à la pièce d'angle A2 à qui elles sont par ailleurs semblables.

On voit que ces pièces comprennent un corps massif 41 pourvu d'une aile de fixation 42 qui peut être vissée sur la table T (voir aussi la figure 1).

Les poutrelles latérales contiguës A3 et A4 qui sont situées aux niveaux respectifs N2 et N1 sont fixées dans les blocs 41 à l'aide de vis axiales 43 placées dans des trous traversants 44 de ces blocs. Ce dernier supporte également les extrémités correspondantes des crémaillères 27 et 27a longeant les côtés respectifs du châssis A.

**Revendications**

1. Robot industriel dont le porte-outil (D) est doté d'au moins deux degrés de liberté (x, y) pour pouvoir être placé à un endroit quelconque d'un champ d'action cartésien (T) à desservir, ce robot comprenant un châssis (A) sur lequel sont montés deux ponts mobiles (B, C) supportant le porte-outil et pourvus de moyens moteurs assurant leur déplacement respectivement selon les deux degrés de liberté, caractérisé:

-en ce que le châssis (A) revêt la forme d'un cadre fixe dont les paires de côtés opposés (A3, A4) forment des rails de guidage fixes pour lesdits ponts (B, C);

-en ce que chacun desdits ponts (B, C) comporte deux chariots montés mobiles respectivement sur deux rails opposés correspondants et reliés ensemble par une traverse (B3, C3) s'étendant d'un rail à l'autre dans une direction qui est perpendiculaire à la direction de mouvement de ce pont; et

-en ce que lesdites traverses (B3, C3) s'entrecroisent à une certaine distance l'une de l'autre dans le porte-outil (D) et constituent des éléments de guidage sur lesquels le porte-outil (D) est monté à coulissement libre.

2. Robot industriel suivant la revendication 1, caractérisé en ce que ledit porte-outil (D) comporte un corps (D1) dans lequel sont ménagés deux passages (D2, D3) s'étendant respectivement dans les directions de mouvement des deux degrés de libertés (x et y) du porte-outil (D), tout en étant espacés l'un de l'autre dans une direction perpendiculaire à ces deux directions de mouvement, chacun des passages étant traversés par la traverse (B3 ou C3) de l'un des ponts (B ou C).

3. Robot industriel suivant la revendication 2, caractérisé en ce que lesdites traverses (B3 et C3) ont des sections circulaires constantes et en ce qu'elles coulissent dans lesdits passages (D2, D3) du porte-outil (D) par l'intermédiaire d'au moins un palier à circulation de billes (D4, D5).

4. Robot industriel suivant l'une quelconque des revendications 1 à 3, caractérisé en ce que lesdits ponts (B, C) sont identiques et montés sur lesdits rails de guidage (A3, A4) en position inversée l'un par rapport à l'autre.

5. Robot industriel suivant l'une quelconque des revendications 1 à 4, caractérisé en ce que les deux chariots (B1, C1 et B2, C2) de chaque pont sont pourvus de moyens d'entraînement (5, 6, 8, 27, 35; 5a, 6a, 8a, 27a, 35a) qui sont accouplés les uns aux autres au moyen d'un arbre de transmission (10) s'étendant parallèlement à la traverse (B3, C3) du pont (B, C).

6. Robot industriel suivant la revendication 5, caractérisé en ce que ledit arbre de transmission (10) s'étend à l'intérieur de la traverse (B3, C3) du pont.

7. Robot industriel suivant l'une quelconque des revendications 5 et 6, caractérisé en ce que les moyens moteurs de l'un des chariots (B1, C1) comportent un moteur électrique d'entraînement (8, 8a) porté par ce chariot.

8. Robot industriel suivant la revendication 7, caractérisé en ce que lesdits moyens moteurs comportent des pignons d'entraînement (6, 35; 6a, 35a) couplés respectivement directement audit moteur (8, 8a) ou par l'intermédiaire dudit arbre de transmission (10, 10a), et en ce que ces pignons coopèrent avec des crémaillères (5, 27; 5a, 27a) s'étendant le long des rails de guidage (A3, A4) du châssis.

*Fig.1*

0 265 855

0 265 855

Fig.2

Fig. 3

Fig.4

Fig.5

Fig.7

Fig.6

0 265 855

0 265 855

Fig.9

Fig.8

Fig. 11

Fig. 10

Fig. 12

Fig.13

Fig. 14

Fig. 15

0 265 855

0 265 855

Fig. 17

Fig. 16

Fig. 18

Fig. 19

0 265 855

0 265 855

Fig. 21

Fig. 20

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 412 848 (SCHLEICHER GmbH et al.) <br> * Revendications 1-5 * | 1-3,7 | B 25 J 9/02 |
| Y | | 4,5 | |
| Y | FR-A-2 062 223 (TRADERIGHTS ESTABLISHMENT) <br> * Page 1, lignes 18-33; page 2, lignes 24-25,29-37; page 3, lignes 1-16 * | 4,5 | |
| A | | 8 | |
| A | US-A-2 880 632 (CHARLAT) <br> * Colonne 2, lignes 51-59 * | 3 | |
| A | DE-B-1 211 802 (ZUSE K.G.) <br> * En entier * | 1,2,5,8 | |
| A | FR-A- 575 028 (COUGNOT) <br> * En entier * | 1,2,5 | |

### DOMAINES TECHNIQUES RECHERCHES (Int. Cl.4)

B 25 J
B 43 L
B 23 Q
G 01 D

Le présent rapport a été établi pour toutes les revendications

| Lieu de la recherche | Date d'achèvement de la recherche | Examinateur |
|---|---|---|
| LA HAYE | 20-01-1988 | LAMMINEUR P.C.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)